Europäisches Patentamt

European Patent Office

Office européen des brevets

(11) Veröffentlichungsnummer: **0 244 396**
**A2**

(12) # EUROPÄISCHE PATENTANMELDUNG

(21) Anmeldenummer: 87890082.8

(22) Anmeldetag: 23.04.87

(51) Int. Cl.³: **F 16 C 33/06**
**F 16 C 33/24**

(30) Priorität: 24.04.86 AT 1101/86

(43) Veröffentlichungstag der Anmeldung:
04.11.87 Patentblatt 87/45

(84) Benannte Vertragsstaaten:
DE FR GB IT NL SE

(71) Anmelder: Austria Metall Aktiengesellschaft

A-5282 Braunau am Inn(AT)

(72) Erfinder: Kutner, Franz, Dipl.-Ing.
Mozartstrasse 60
A-5280 Braunau am Inn(AT)

(54) **Verbundgleitlager und Verfahren zur Herstellung desselben.**

(57) Verbundgleitlager, z.B. Lagereinsatz mit Verbundmaterial, insbesondere für die Lagerung von rotierenden Wellen mit zumindest einer Lagermetallschicht, z.B. Stützschale, einer darauf angeordneten Laufschicht mit einem Metall aus Zinn, Blei, Wismut, Indium oder Cadmium bzw. deren Basislegierungen, wobei die Laufschicht im wesentlichen aus Zinn, Blei, Wismut, Indium oder Cadmium bzw. deren Basislegierungen aufgebaut ist und der Gehalt dieser Metalle von der Oberfläche der Laufschicht hin zur Lagermetallschicht mit einer Aluminiumlegierung abnimmt und der Aluminiumgehalt in dieser Richtung zunimmt, wobei zumindest teilweise eine feste Mischung dieser Metalle mit Aluminium vorliegt.

Fig. 1

EP 0 244 396 A2

Verbundgleitlager und Verfahren zur Herstellung desselben

---

Die Erfindung bezieht sich auf ein Verbundgleitlager, z.B. Lagereinsatz mit Verbundmaterial, insbesondere für die Lagerung von rotierenden Wellen und auf ein Verfahren zur Herstellung desselben.

Bei verschiedenen Konstruktionen sind zur Lagerung von Wellen an Stelle von Wälzlagern Gleitlager vorgesehen, um einen hohen Flächendruck aufnehmen zu können. Hiebei ist es üblich, daß eine Laufschichte, z.B.aus Zinn, Blei oder dgl. vorgesehen wird, welche entweder von einem Stützring, z.B. aus einer Bronze-, Aluminiumlegierung oder dgl. getragen wird, wobei dieser Stützring seinerseits von einem weiteren Stützring aus Stahl umgeben sein kann. Um die Diffusionen zwischen der Laufschichte und der darunter angeordneten Stützschichte zu vermeiden, ist es bekannt, diffusionshemmende Schichten vorzusehen, so daß die Laufschichte keine Verarmung an den die Reibung vermindernden Legierungsbestandteilen erfährt. Die Aufbringung der Laufschichten erfolgt bei Laufschichten, welche mit dem darunter befindlichen Material mischbar sind, durch Schweißen. Eine weitere Aufbringungsmöglichkeit, wobei eine Mischbarkeit nicht gegeben sein muß, besteht in der elektrolytischen Abscheidung der Laufschichte. Ein bevorzugtes Verfahren bei der Aufbringung von einer nicht mischbaren Laufschichte besteht darin, daß im Trägerwerkstoff eine Schwalbenschwanznut oder ein abgeflachtes Spitzgewinde vorgesehen wird, worauf die Laufschichte aufgegossen wird, so daß eine mechanische Verankerung der Laufschichte auf der Trägerschichte eintritt.

Aluminiumlegierungen sind für Gleitlager sehr bevorzugt, da sie einerseits mit hohen Flächendrücken beaufschlagt werden können und andererseits ein hohes Wärmeleitvermögen aufweisen, so daß auch bei hohen Beanspruchungen der Achsen eine gute Ableitung der Wärme gewährleistet sein kann. Zinn, Blei, Wismut, Indium oder Cadmium bzw. deren Basislegierungen, besitzen hervorragende Laufeigenschaften, so daß sie für Gleitlager von besonderem Interesse sind. Eine Kombination von derartigen Laufschichten mit einer Lagermetallschichte aus einer Aluminiumlegierung konnten bislang lediglich durch Abschneiden dieser Metallaufschichte auf die Aluminium-Lagermetallschichte oder durch Aufgießen der Metallschichte erreicht werden. Derartige Laufschichten weisen jedoch nur eine schlechte Verankerung auf, da sie entweder rein mechanisch und adhäsiv bzw. rein adhäsiv sind, womit ein derartiges Lager nur geringsten Schubbeanspruchungen unterworfen werden kann.

Die vorliegende Erfindung hat sich zum Ziel gesetzt, ein Verbundgleitlager zu schaffen, welches eine Laufschichte mit Zinn, Blei, Wismut, Indium oder Cadmium bzw. deren Basislegierungen aufweist, welche von einer Lagermetallschichte mit einer Aluminiumlegierung getragen ist, wobei die Verbindung zwischen dem Metall der Laufschichte und der Aluminiumlegierung nicht nur rein adhäsiv, also im wesentlichen über eine Fläche, sondern über ein größeres Volumen, also eine Art Zwischenschicht, die aus Aluminiumlegierung und dem Metall der Laufschichte bestehen soll, gebildet ist. Da die Löslichkeit von Zinn, Blei, Wismut, Indium oder Cadmium bzw. deren Basislegierungen in Aluminium im festen Bereich sehr gering ist, jedoch im flüssigen Zustand eine gegenseitige Löslichkeit gegeben ist, tritt bei Erstarrung, insbesondere bei üblichen Abkühlbedingungen eine Entmischung unter Schwerkraftbedingungen ein, konnte ein derartiges Verbundgleitlager trotz der hohen Löslichkeit von den flüssigen Metallen im flüssigen Aluminium und umgekehrt bei hohen Temperaturen, noch nicht erhalten werden.

Das Verbundgleitlager, z.B. Lagereinsatz mit Verbundmaterial, insbesondere für die Lagerung von rotierenden Wellen mit zumindest einer Lagermetallschicht, z.B. Stützschale, einer darauf angeordneten Laufschichte mit einem Metall aus Zinn, Blei, Wismut, Indium oder Cadmium bzw. deren Basislegierungen besteht im wesentlichen darin, daß die Laufschichte im wesentlichen aus Zinn, Blei, Wismut, Indium oder Cadmium bzw. deren Basislegierungen aufgebaut ist und der Gehalt dieser Metalle von der Oberfläche der Laufschicht hin zur Lagermetallschicht mit einer Aluminiumlegierung abnimmt und der Aluminiumgehalt in dieser Richtung zunimmt, wobei zumindest teilweise eine feste Mischung dieser Metalle mit Aluminium vorliegt.

Durch eine Übergangsschichte zwischen der Legierung der Laufschichte und der Aluminiumlegierung, in welcher der Gehalt an Metallen der Laufschichte von der Oberfläche der Laufschicht hin zur Lagermetallschichte abnimmt und der Aluminiumgehalt in dieser Richtung zunimmt, wird eine feste Verankerung der Laufschichte in der Aluminium-Lagermetallschichte erreicht.

Sind die festen Mischungen in zumindest einem Ring und/oder einer Schraube um die Achse des Lagers, insbesondere zentrisch angeordnet vorgesehen, so können die zwischen den Ringen bzw. zwischen der Schraube vorgesehenen Flächen durch eine Legierung mit höherer Tragfähigkeit, z.B. der Aluminiumlegierung der Lagermetallschichte, gebildet sein. Vorzugsweise bestehen etwa 30 - 70%, insbesondere 40 - 60%, der Oberfläche der Laufschichte aus der festen Mischung.

Das erfindungsgemäße Verfahren zur Herstellung eines Verbundgleitlagers, z.B. Lagereinsatz mit Verbundmaterial, insbesondere für die Lagerung von rotierenden Wellen, wobei zumindest eine Lagermetallschichte mit einer Aluminiumlegierung mit einem Metall im wesentlichen aus Zinn, Blei, Wismut, Indium oder Cadmium bzw. deren Basislegierungen durch Wärmeeinwirkung verbunden werden, besteht im wesentlichen darin, daß auf die Lagermetallschicht aus einer Aluminiumlegierung ein Band aus einem Metall aus Zinn, Blei, Wismut, Indium oder Cadmium bzw. deren Basislegierungen aufgelegt und anschließend aufgeschweißt, insbesondere durch Hochenergieschweißen, z.B. Elektronenstrahl-, Laserstrahl-, Plasmaschweißen, und anschließend die Schweiße rasch abgekühlt wird. Auf diese Art und Weise wird die vischung, welche beim Schweißen im flüssigen Zustand entsteht, auch im festen Zustand mit einer feinsten Verteilung der in Aluminium unlöslichen Elemente erhalten, welche in Form von vereinzelten Ausscheidungen an den Korngrenzen bzw. Einschlüssen in den Aluminiumkörnern vorliegen, da durch die schnelle Abkühlung keine schwerkraftsbedingte Entmischung auftreten kann.

Wird das Band beim Auflegen auf die Lagermetallschichte aus Aluminium eingeschweißt, so ergibt sich ein besonders einfaches Verfahren, wobei gleichzeitig eine besonders exakte Lage der Mischungszone erreicht wird.

Wird das Band schraubenförmig oder ringförmig um die Achse des Lagers herum auf die Lagermetallschicht aus Aluminium aufgeschweißt, so können Tragschichten aus der unvermischten Lagermetallschichte erhalten werden.

Wird ein Band aufgelegt und lediglich entlang ringförmiger bzw. schraubenförmiger Bahnen mit der Lagermetallschichte durch Schweißen verbunden, so ist ein besonders einfaches Verfahren zur Bildung von ring- bzw. schraubenförmigen, z.B. zinnhältigen Laufschichten gegeben.

Wird auf einem ebenen Blech aus einer Aluminium-Basislegierung die Lauffläche aufgeschweißt, worauf durch Biegen und mechanische Bearbeitung ein Verbundgleitlager hergestellt wird, so ist ein besonders einfaches Verfahren zur Herstellung eines derartigen Lagers gegeben, wobei gleichzeitig eine hohe Präzision der mechanischen Bearbeitung erreichbar ist, da durch ein genaues Abfräsen der übermäßigen Laufschichte im planen Zustand möglich ist und sodann die geringfügige Feinbearbeitung im gekrümmten Zustand leichter und mit geringerem Zeitaufwand durchgeführt werden kann.

Im folgenden wird die Erfindung an Hand der Zeichnungen und Beispiele näher erläutert.

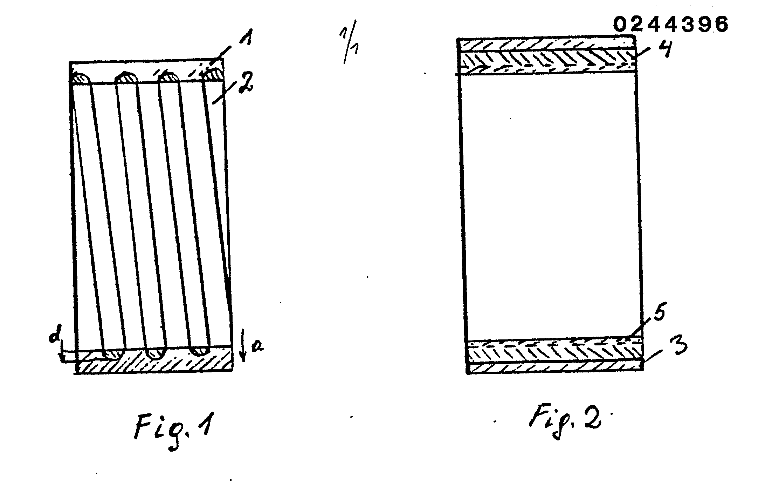

Es zeigen Fig. 1 den Schnitt durch eine Verbundlagerschale mit schraubenförmig aufgebrachter Lauflegierung und Fig. 2 eine Verbundgleitlagerschale mit vollflächiger Laufschichte.

Die in Fig. 1 dargestellte Verbundlagerschale besteht aus einer ringförmigen Lagermetallschichte, welche aus einer Legierung folgender Zusammensetzung in Gew.% aufgebaut ist: Silizium 10,7 ; Kupfer 1,1 ; Nickel 0,9 ; Magnesium 0,92 ; Rest Aluminium.

Der Ring kann aus zwei oder mehreren teilkreisförmigen Stücken gebildet sein, die Laufschichte 2 ist schraubenförmig innerhalb des Ringes 1 eingebracht und besteht aus einer Mischung zwischen der Aluminium-Basislegierung und reinem Zinn, wobei die Konzentration des Zinns in Richtung des Pfeiles a radial nach außen hin abnimmt. Die Dicke d der Laufschichte 2 beträgt ca. 1 mm, wohingegen die Gesamtdicke des Ringes 6 mm beträgt, wobei der Durchmesser 70 mm und die Breite des Lagers 35 mm beträgt. Ein derartiges Lager ist beispielsweise für schwere Dieselmotoren, wie sie z.B. für Schiffe und schwere LKWs in Verwendung sind, besonders gut geeignet. Der Oberflächenanteil der Laufschichte mit der festen Mischung beträgt 50% der Gesamtoberfläche.

Das in Fig. 2 im Schnitt dargestellte Verbundlager weist einen äußeren Ring 3 aus Stahl auf, welcher Stahl mit einem Ring 4 aus einer Aluminiumlegierung folgender Zusammensetzung in Gew.% verbunden ist:
Zink 4,5 ; Silizium 1,5 ; Kupfer 1,1 ; Magnesium 0,4 ; Blei 0,95 ; Titan 0,0§ ; Rest Aluminium.

Die Laufschichte 5 besteht aus einer Mischung zwischen der Legierung des Ringes 4 und einer Bleibasislegierung folgender Zusammensetzung in Gew.%:
Zinn 9,0 ; Antimon 14,0 ; Kupfer 1,0 ; Cadmium 0,5 ; Arsen 0,5 ; Nickel 0,5 ; Rest Blei und Verunreinigungen.

Beispiel 1:
Auf ein planes Blech aus einer Legierung mit in Gew.% Zink 4,5 ; Silizium 1,5 ; Kupfer 1,1 ; Magnesium 0,4 ; Blei 0,95; Titan 0,09 ; Rest Aluminium, mit 5 mm Dicke, wurde eine Zinnfolie mit 0,7 mm Dicke aufgelegt. Die Oberfläche des Aluminiumbleches wurde vorerst entfettet, geschliffen und mit einer 15%igen Natronlauge bei 60°C gebeizt und in 1:1 $HNO_3$ neutralisiert. Mit einem Elektronenstrahl-Schweißgerät wurden sodann 0,2 mm breite parallel zueinander angeordnete und parallel zur Längskante angeordnete Schweißungen durchgeführt. Die Aufschmelztiefe betrug 1,2 mm. Aus dem so behandelten Blech wurde ein Streifen von 35 mm Breite und einem späteren Durchmesser von 70 mm entsprechender Länge gestanzt, zu einem Ring gebogen, worauf die innere Oberfläche mechanisch bearbeitet wurde, bis der erwünschte Innendurchmesser erhalten war, wobei die Zinnfolie in den Bereichen zwischen der ringförmigen Lauffläche abgearbeitet wurde. Ein derartiges Lager wurde sodann in radialer Richtung zerschnitten und mit einer Mikrosonde wurde die chemische Zusammensetzung der Lauffläche untersucht, wobei folgende Analyse erhalten wurde:

Oberfläche 85 Gew.% Zinn

0,2 mm 81,7 Gew.% Zinn,   17,1 Gew.% Aluminium

0,4 mm 73,2 Gew.% Zinn,   24,3 Gew.% Aluminium

0,6 mm 48,5 Gew.% Zinn,   46,8 Gew.% Aluminium

0,8 mm 19,8 Gew.% Zinn,   72,9 Gew.% Aluminium

1 mm   7,1 Gew.% Zinn,   83,7 Gew.% Aluminium

1,2 mm  0,5 Gew.% Zinn,   91,0 Gew.% Aluminium.

Bei einem Versuch, die ringförmige Lauffläche aus der Ringnut zu lösen, riß jeweils die ringförmige Lauffläche ab, so daß die Haftung derselben im Ring größer war, als die Festigkeit der Legierung.

Beispiel 2:

Es wurde ein Blech mit einer Aluminiumlegierung der Zusammensetzung in Gew.%: Silizium 10,7 ; Kupfer 1,1 ; Nickel 0,9 ; Magnesium 0,92 ; Rest Aluminium, mit einem Stahl von 4 mm walzplattiert, sodann die Aluminium-Oberfläche geschliffen, entfettet und anschließend elektrolytisch gebeizt. Auf diese Oberfläche wurde sodann eine 0,8 mm dicke Folie aus einer Bleilegierung folgender Zusammensetzung in Gew.%: Zinn 9,0 ; Antimon 14,0 ; Kupfer 1,0 ; Cadmium 0,5 ; Arsen 0,5 ; Nickel 0,5 ; Rest Blei und Verunreinigungen aufgebracht. Es wurde sodann mittels einem Laserschweißgerät die gesamte Oberfläche durch mäanderförmiges Abfahren hitzebeaufschlagt, so daß ein Einschmelzen der Bleifolie in die Oberfläche des Ringes aus der Aluminiumlegierung erfolgte. Aus dem so gefertigten Blech wurde ein Zuschnitt in gewünschter Größe gestanzt und sodann ein

- 8. -

Lager gemäß Beispiel 1 gefertigt.

Ein derartiges Lager wurde sodann in radialer Richtung zerschnitten und mit einer Mikrosonde wurde die chemische Zusammensetzung der Lauffläche untersucht, wobei folgende Analyse erhalten wurde:

Oberfläche 75 Gew.% Blei

0,2 mm 63,8 Gew.% Blei,   31,5 Gew.% Aluminium

0,4 mm 47,4 Gew.% Blei,   46,5 Gew.% Aluminium

0,6 mm 24,6 Gew.% Blei,   64,1 Gew.% Aluminium

0,8 mm  3,2 Gew.% Blei,   82,3 Gew.% Aluminium

1   mm  0,1 Gew.% Blei,   85,7 Gew.% Aluminium.

Analoge Lager wurden sowohl mit den Aluminiumlegierungen gemäß Beispiele 1 und 2 als auch mit Indium, Wismut und Cadmium hergestellt, wobei sowohl mit Laser-, Elektronenstrahl- bzw. Plasmaschweißen der Auftrag erfolgte. Teilweise wurde der Schweißzusatzwerkstoff zwar bandförmig aufgetragen, jedoch in Pulverform zugeführt. Die Laufschichten der Lager wiesen eine größere Haftfestigkeit zu dem Trägermaterial als die Zugfestigkeit der Laufschichte auf.

Durch die kurzzeitige, aber hochenergetische Wärmeeinbringung über Elektronenstrahlschweißen bzw. Laserstrahlschweißen, erfolgt ein rasches Einschmelzen der niedrig schmelzenden Legierung in die Oberfläche der Aluminiumlegierung, wobei ein anschließendes rasches Erstarren gewährleistet ist, da das restliche Werkstück nicht erhitzt wurde und zur raschen Wärmeabfuhr, insbesondere auf Grund der hohen Wärmeleitfähigkeit von Aluminium führt.

Patentansprüche:

1. Verbundgleitlager, z.B. Lagereinsatz mit Verbundmaterial, insbesondere für die Lagerung von rotierenden Wellen mit zumindest einer Lagermetallschicht, z.B. Stützschale, einer darauf angeordneten Laufschichte mit einem Metall aus Zinn, Blei, Wismut, Indium oder Cadmium bzw. deren Basislegierungen, dadurch gekennzeichnet, daß die Laufschichte im wesentlichen aus Zinn, Blei, Wismut, Indium oder Cadmium bzw. deren Basislegierungen aufgebaut ist und der Gehalt dieser Metalle von der Oberfläche der Laufschicht hin zur Lagermetallschicht (1) mit einer Aluminiumlegierung abnimmt und der Aluminiumgehalt in dieser Richtung zunimmt, wobei zumindest teilweise eine feste Mischung dieser Metalle mit Aluminium vorliegt.

2. Verbundgleitlager nach Anspruch 1, dadurch gekennzeichnet, daß die festen Mischungen in zumindest einem Ring und/oder in einer Schraube um die Achse des Lagers, insbesondere zentrisch, angeordnet vorgesehen sind.

3. Verbundgleitlager nach Anspruch 1 oder 2, dadurch gekennzeichnet, daß die Laufschichte mit einem Oberflächenanteil von etwa 30 bis 70%, insbesondere 40 bis 60%, mit der festen Mischung aufgebaut ist.

4. Verfahren zur Herstellung eines Verbundgleitlagers,z.B. Lagereinsatz mit Verbundmaterial, insbesondere für die Lagerung von rotierenden Wellen, wobei zumindest eine Lagermetallschichte mit einer Aluminiumlegierung mit einem Metall im wesentlichen aus Zinn, Blei, Wismut, Indium oder Cadmium bzw. deren Basislegierungen durch Wärmeeinwirkung verbunden werden, insbesonders für ein Verbundgleitlager nach Anspruch 1, 2 oder 3, dadurch gekennzeichnet, daß auf die Lagermetallschichte aus einer Aluminiumlegierung ein Band aus einem Metall aus Zinn, Blei, Wismut, Indium oder Cadmium bzw. deren Basislegierungen aufgelegt und anschließend aufgeschweißt insbesondere durch Hochenergieschweißen, z.B. Elektronenstrahl-, Laserstrahl-, Plasmaschweißen, und anschließend die Schweiße rasch abgekühlt wird.

5. Verfahren zur Herstellung eines Verbundgleitlagers nach Anspruch 4, dadurch gekennzeichnet, daß das Band beim Auflegen auf die Lagermetallschicht aus Aluminium eingeschweißt wird.

6. Verfahren zur Herstellung eines Verbundgleitlagers nach Anspruch 4 oder 5, dadurch gekennzeichnet, daß das Band schrauben- oder ringförmig um die Achse des Lagers herum auf die Lagermetallschicht aus Aluminium aufgeschweißt wird.

7. Verfahren zur Herstellung eines Verbundgleitlagers nach Anspruch 4, 5 oder 6, dadurch gekennzeichnet, daß das Band aufgelegt und lediglich entlang ringförmiger bzw. schraubenförmiger Bahnen mit der Lagermetallschicht durch Schweißen verbunden wird.

8. Verfahren zur Herstellung eines Verbundgleitlagers nach einem der Ansprüche 4 bis 7, dadurch gekennzeichnet,daß auf einem ebenen Blech einer Aluminiumbasislegierung die Lauffläche aufgeschweißt wird, worauf durch Biegen und mechanische Bearbeitung ein Verbundgleitlager hergestellt wird.

Fig. 1

Fig. 2